# EUROPEAN PATENT APPLICATION

(11) **EP 2 993 635 A1**
(43) Date of publication of application: **09.03.2016**
(21) Application number: 15182864.7
(22) Date of filing: 28.08.2015
(51) Int. Cl.: G06Q 20/20, G07G 5/00

(54) **RECEIPT PRINTING APPARATUS**

(30) Priority: 03.09.2014 JP 2014179528
(71) Applicant: Toshiba TEC Kabushiki Kaisha, Tokyo 141-0032 (JP)
(72) Inventor: ENOMOTO, Hideki, Shinagawa-ku, Tokyo 141-0032 (JP); MATSUMURA, Kazuyuki, Shinagawa-ku, 141-0032 (JP); NAKAYAMA, Tadashi, Shinagawa-ku, 141-0032 (JP); SEI, Tomohiro, Shinagawa-ku, 141-0032 (JP)
(74) Representative: Takeuchi, Maya

(57) **Abstract**

An information processing apparatus, capable of being connected with a POS terminal, comprises an acquisition unit configured to acquire face information of a customer, a face authentication unit configured to specify receipt information of the customer corresponding to the face information acquired by the acquisition unit by referring to a table in which receipt information generated by the POS terminal for a transaction is stored in association with face information acquired in the transaction, and a printing control unit configured to print out the receipt information specified by the face authentication unit from a printing unit.

## Description

### FIELD

Embodiments described herein relate to an information processing apparatus and a method for outputting a receipt by the information processing apparatus.

### BACKGROUND

Conventionally, a system in which a plurality of POS terminals are connected via a network is introduced in a store such as a supermarket. In the system, each POS terminal is equipped with a printer device for printing a receipt. Thus, each POS terminal can complete an account settlement job.

However, the carrying of a printer on each POS terminal results in an increased cost. Moreover, in the conventional POS terminal, the output of a receipt in each account settlement job leads to a problem that a receipt, if not received by a customer, is wasted. Thus, a technology is desired by means of which receipts can be output efficiently.

### BRIEF DESCRIPTION OF DRAWINGS

Fig. 1 is a diagram illustrating the general structure of a checkout system according to a first embodiment;
Fig. 2 is a block diagram exemplifying the structure of a POS terminal according to the first embodiment;
Fig. 3 is a block diagram exemplifying the structure of a server apparatus according to the first embodiment;
Fig. 4 is a diagram exemplifying the data structure of a receipt management table;
Fig. 5 is a block diagram exemplifying the structure of a printer apparatus according to the first embodiment;
Fig. 6 is a block diagram exemplifying an account settlement processing carried out by a POS terminal and a server apparatus according to the first embodiment;
Fig. 7 is a flowchart exemplifying a receipt deletion processing carried out by a server apparatus according to the first embodiment;
Fig. 8 is a flowchart exemplifying a receipt output processing carried out by a printer apparatus according to the first embodiment;
Fig. 9 is a diagram illustrating the general structure of a checkout system according to a second embodiment;
Fig. 10 is a block diagram exemplifying the structure of a POS terminal according to the second embodiment; and
Fig. 11 is a block diagram exemplifying the structure of a printer apparatus according to the second embodiment.

### DETAILED DESCRIPTION

An information processing apparatus, capable of being connected with a POS terminal, comprises an acquisition unit configured to acquire face information of a customer, a face authentication unit configured to specify receipt information of the customer corresponding to the face information acquired by the acquisition unit by referring to a table in which receipt information generated by the POS terminal for a transaction is stored in association with face information of a customer acquired in the transaction, and a printing control unit configured to print out the receipt information specified by the face authentication unit from a printing unit.

The above, and other objects, features and advantages of the present invention will be made apparent from the following description of the preferred embodiments, given as non-limiting examples, with reference to the drawings.

### (First Embodiment)

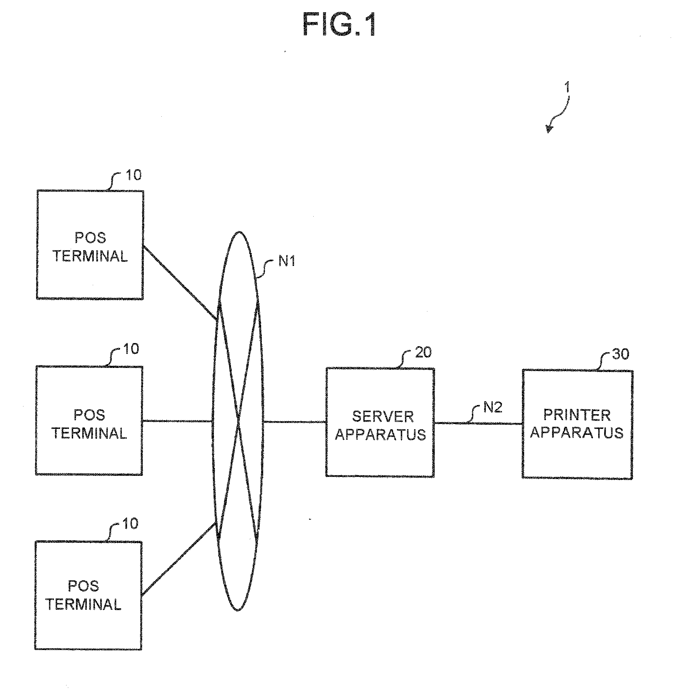

Fig. 1 is a diagram illustrating the general structure of a checkout system according to the first embodiment. As shown in Fig. 1, in accordance with the first embodiment, a checkout system 1 comprises a plurality of POS terminals 10, a server apparatus 20 and a printer apparatus 30. The server apparatus 20 and the printer apparatus 30 function as an information processing apparatus in the first embodiment.

Each POS terminal 10 is connected with the server apparatus 20 via a wireless or wired network N1. Further, the server apparatus 20 and the printer apparatus 30 are connected with each other via a wireless or wired network N2. The network N1 is, for example, a LAN (Local Area Network). The network N2 may be a LAN similar to the network N1 or is in a one-to-one connection, for example, a serial connection.

Each apparatus of the checkout system 1 is described below.

The POS terminal 10 is a commodity sales data processing apparatus which carries out a commodity sales data processing relating to the settlement of commodities. The POS terminal 10 is arranged at, for example, a settlement or checkout place in a store such as a supermarket.

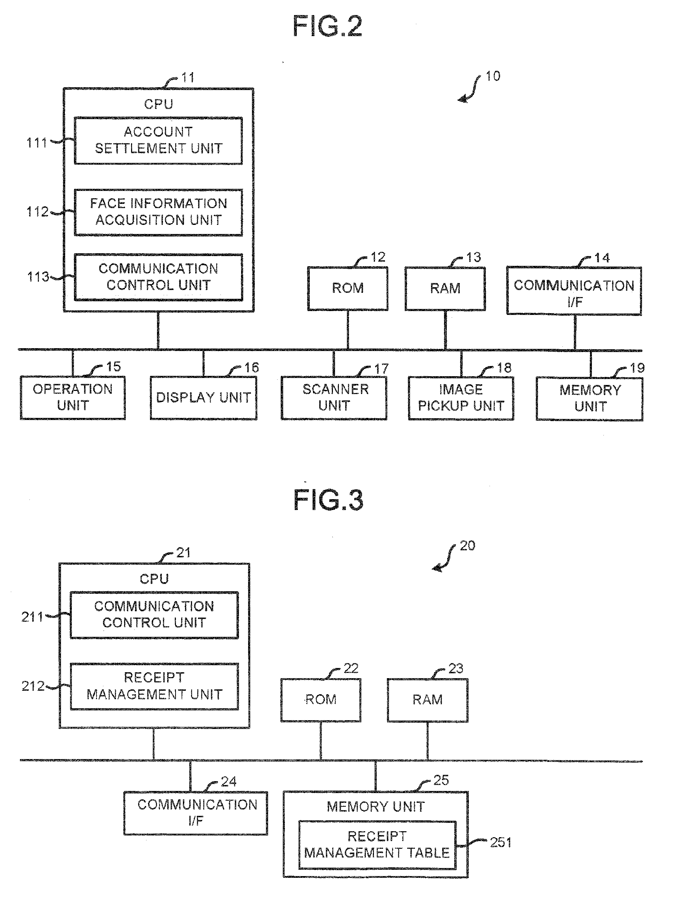

Fig. 2 is a block diagram exemplifying the structure of the POS terminal 10. As shown in Fig. 2, the POS terminal 10 comprises a CPU (Central Processing Unit) 11, a ROM (Read Only Memory) 12, a RAM (Random Access Memory) 13, a communication I/F 14, an operation unit 15, a display unit 16, a scanner unit 17, an image pickup unit 18 and a memory unit 19. The POS terminal 10 further comprises a timer (not shown) such as a RTC (Real Time Clock).

The ROM 12 stores various programs and data executed by the CPU 11. When the CPU 11 executes the various programs, the RAM 13 temporarily stores data and programs. The CPU 11 develops the various programs stored in the ROM 12 and the memory unit 19 in the RAM 13 and executes the various programs to realize each functional unit described later.

The communication I/F 14 is an interface which can be connected with the network N1. The POS terminal 10 communicates with an external device connected with the network N1 through the communication I/F 14.

The operation unit 15 is an input device such as a keyboard or a pointing device. The keyboard includes a numeric keypad on the upper surface of which numeric characters or arithmetic operators are displayed and a closing key for instructing the completion of a transaction. If the operation unit 15 receives an operation, then the content of the operation is output to the CPU 11.

The display unit 16, which is a display device such as an LCD (Liquid Crystal Display), displays various kinds of information, such as the content of a transaction, under the control of the CPU 11. In addition to a display device for operator, the display unit 16 also includes a display device for customer. Further, the display unit 16 may be a touch panel. In this case, the touch panel also functions as the operation unit 15.

The scanner unit 17 is a reader for reading a code symbol such as a barcode. The scanner unit 17 reads the code symbol affixed on a commodity and outputs the commodity ID contained in the code symbol to the CPU 11. The commodity ID is a commodity identifier, such as a JAN code, for identifying a commodity. The scanner unit 17 may also be the image pickup unit 18 described later. In this case, the image pickup unit 18 cooperates with a program for decoding the code symbol to function as the scanner unit 17.

The image pickup unit 18 is a device provided with an image pickup element such as a CCD (Charge Coupled Device) or a CMOS (Complementary MOS). In the embodiment, the image pickup unit 18 is located at a position where the face of the customer using the POS terminal 10 for a settlement can be captured substantially directly at the front. Under the control of the CPU 11, the image pickup unit 18 captures the face of the customer who uses the terminal for a settlement. Further, the image pickup unit 18 may be integrated with the POS terminal 10 or externally connected with the POS terminal 10.

The memory unit 19 is a storage device equipped with a non-volatile storage medium such as an HDD (Hard Disk Drive) or an SSD (Solid State Drive). The memory unit 19 stores the various programs and data relating to the operation of the POS terminal 10. For example, the memory unit 19 stores a commodity master file which registers commodity information relating to a commodity and a commodity ID, associated with the commodity information, for identifying the commodity. The commodity information includes, for example, the commodity name and the unit price of a commodity.

Further, in the present embodiment, each POS terminal 10 is not limited to store the commodity master file in the foregoing way. For example, the POS terminal 10 may refer to a commodity master file which is stored in an external device such as the server apparatus 20.

Further, by executing the programs stored in the ROM 12 and the memory unit 19, the CPU 11 of the POS terminal 10 functions as an account settlement unit 111, a face information acquisition unit 112 and a communication control unit 113.

The account settlement unit 111 carries out an account settlement processing relating to the registration and settlement of the commodities purchased by a customer. Specifically, the account settlement unit 111 reads, based on a commodity ID acquired by the scanner unit 17, commodity information corresponding to the commodity ID from the commodity master file. The account settlement unit 111 calculates the selling amount of the commodity according to the unit price included in the commodity information and a sales quantity input through the operation unit 15.

If the payment for the commodities is completed, then the account settlement unit 111 records the commodity IDs and the selling amounts of the commodities in a sales master file (not shown), to carry out a sales registration. Further, the account settlement unit 111 generates receipt information itemizing the content of the transaction. The receipt information includes the commodity name and the sales quantity of each commodity purchased by a customer and the amount paid by the customer. The receipt information further includes a terminal ID for identifying the POS terminal 10 carrying out the transaction, a transaction ID for identifying the transaction and date information representing the date and time the transaction is executed.

The face information acquisition unit 112 controls the image pickup unit 18 at the time the account settlement unit 111 carries out an account settlement processing to acquire the face image of the customer captured by the image pickup unit 18 as face information. The face information may be the image (face image) captured by the image pickup unit 18 or information obtained by parameterizing the features of the face of the customer. Further, the face information acquisition unit 112 may have a function of detecting facial features (e.g. eyes, mouth and nose) from an image. The face information acquisition unit 112 having such function described above acquires the image (face image) as face information if facial features are detected from an image captured by the image pickup unit 18.

The communication control unit 113 performs transmission/reception of various kinds of information to or from the server apparatus 20 through the communication I/F 14. Specifically, if a transaction is completed, then the communication control unit 113 associates the receipt information generated by the account settlement unit 111 in the transaction with the face information acquired by the face information acquisition unit 112 and sends the associated information to the server apparatus 20.

The server apparatus 20 is described below. The server apparatus 20 stores the receipt information and the face information (associated information) sent from each POS terminal 10 to manage them.

Fig. 3 is a block diagram exemplifying the structure of the server apparatus 20. As shown in Fig. 3, the server apparatus 20 comprises a CPU 21, a ROM 22, a RAM 23, a communication I/F 24 and a memory unit 25. Further, the server apparatus 20 includes a timer (not shown) such as an RTC.

The ROM 22 stores the various programs executed by the CPU 21 and data. The RAM 23 temporarily stores data and programs when the CPU 21 executes various programs. The CPU 21 develops the various programs stored in the ROM 22 and the memory unit 25 in the RAM 23 and executes the various programs to realize each functional unit described later.

The communication I/F 24 is capable of connecting with the networks N1 and N2. The server apparatus 20 communicates with external devices connected with the network N1 and N2 through the communication I/F 24.

The memory unit 25 is a storage device such as an HDD or SSD. The memory unit 25 stores the various programs executed by the CPU 21 and data. Further, the memory unit 25 stores a receipt management table 251 which stores the receipt information and the face information sent from the POS terminal 10.

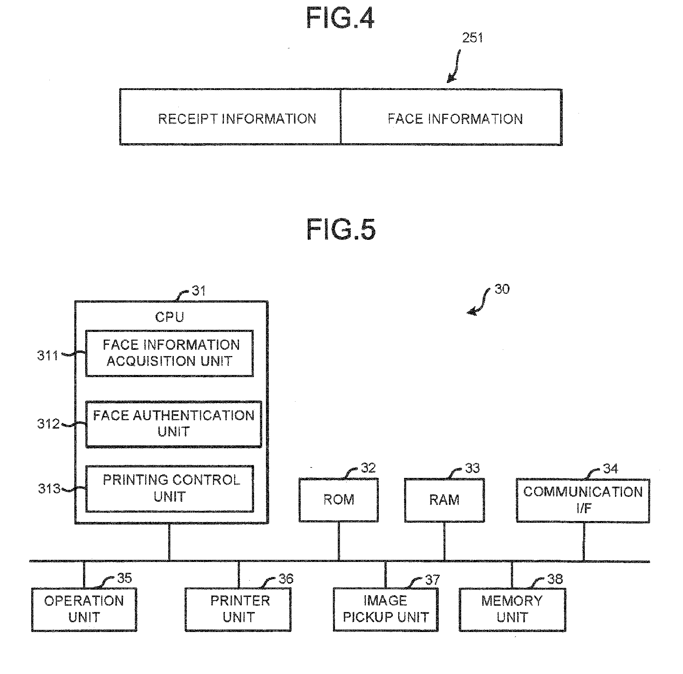

Fig. 4 is a diagram exemplifying the data structure of the receipt management table 251. As shown in Fig. 4, the receipt management table 251 includes an area in which receipt information and face information are stored in an associated manner. Further, the receipt management table 251 is stored in such a manner that the stored receipt management table 251 is readable and writable with the printer apparatus 30.

By executing the programs stored in the ROM 22 and the memory unit 25, the CPU 21 of the server apparatus 20 realizes a communication control unit 211 and a receipt management unit 212 as functional units.

The communication control unit 211 performs transmission/reception of various kinds of information to or from the POS terminal 10 or the printer apparatus 30 through the communication I/F 24. Specifically, the communication control unit 211 receives (acquires) a set of receipt information and face information (associated information) sent from each POS terminal 10. Further, the communication control unit 211 receives a request for reference of the face information and the receipt information sent from the printer apparatus 30.

The receipt management unit 212 is a functional unit for managing the receipt management table 251. If the communication control unit 211 receives a set of receipt information and face information, then the receipt management unit 212 stores the set of receipt information and face information in the receipt management table 251. Further, the receipt management unit 212 sends the receipt information and face information stored in the receipt management table 251 to the printer apparatus 30 in response to a request from the printer apparatus 30.

Further, if a specific period of time elapses from the time the set of receipt information and face information is stored in the receipt management table 251, the receipt management unit 212 deletes the set of receipt information and face information stored from the receipt management table 251. No limitation is given to the specific period of time. For example, the specific period of time may be 10 minutes or 1 hour. Further, the starting point at which the elapse of the specific period of time is calculated may be the date and time the set of receipt information and face information is stored in the receipt management table 251 or the date and time (date and time information) included in receipt information. In the present embodiment, the set of receipt information and face information is deleted, however, only the face information may be deleted.

Next, the printer apparatus 30 is described below. The printer apparatus 30 is used to print a receipt. The printer apparatus 30 is installed nearby, for example, a settlement place or the entrance of a store.

Fig. 5 is a block diagram exemplifying the structure of the printer apparatus 30. As shown in Fig. 5, the printer apparatus 30 comprises a CPU 31, a ROM 32, a RAM 33, a communication I/F 34, an operation unit 35, a printing unit 36, an image pickup unit 37 and a memory unit 38. Further, the printer apparatus 30 includes a timer (not shown) such as an RTC.

The ROM 32 stores various programs and data executed by the CPU 31. The RAM 33 temporarily stores data and programs when the CPU 31 executes the various programs. The CPU 31 develops the various programs stored in the ROM 32 and the memory unit 38 in the RAM 33 and executes the various programs to realize each functional unit described later.

The communication I/F 34 is capable of connecting with the network N2. The printer apparatus 30 communicates with an external device connected with the network N2 through the communication I/F 34.

The operation unit 35 is an input device such as an operation button. The operation button includes a receipt output button (operation unit) for receiving an operation instructing the output of a receipt. If receiving the operation, the operation unit 35 outputs the content of the operation to the CPU 31.

The printing unit (printing device) 36 such as a thermal printer or an impact dot printer prints receipt information on a specified sheet under the control of the CPU 31 to output a receipt.

The image pickup unit 37 is equipped with an image pickup element such as a CCD or CMOS. In the present embodiment, the image pickup unit 37 is mounted on a position where the image pickup unit 37 can photograph the face of the customer approaching the printer apparatus 30,i.e., the customer who operates the image pickup unit 37, substantially directly at the front side of the customer. The image pickup unit 37 photographs the face of the customer operating the terminal under the control of the CPU 31. Further, the image pickup unit 37 may be integrated with or externally connected with the printer apparatus 30.

The memory unit 38 which is equipped with a non-volatile memory medium such as an HDD or SSD stores the various programs and data relating to the operation of the printer apparatus 30.

Further, by executing the programs stored in the ROM 32 and the memory unit 38, the CPU 31 of the printer apparatus 30 realizes a face information acquisition unit 311, a face authentication unit 312 and a printing control unit 313 as functional units.

By controlling the image pickup unit 37, the face information acquisition unit 311 acquires the face image of the customer captured by the image pickup unit 37 as face information. Further, the face information acquisition unit 311 may have a function of detecting facial features from the image. If the face information acquisition unit 311 having the function described above detects facial features from the image captured by the image pickup unit 37, the image (face image) is acquired as face information.

The face authentication unit 312 compares the face information acquired by the face information acquisition unit 311 with the face information stored in the receipt management table 251 of the server apparatus 20 to specify the receipt information of the customer captured by the image pickup unit 37. Specifically, the face authentication unit 312 specifies the face information of the customer captured by the image pickup unit 37 from the face information stored in the receipt management table 251 using a well-known face authentication technology. Further, if incapable of specifying a customer corresponding to the face information acquired by the face information acquisition unit 311 from the receipt management table 251, the face authentication unit 312 notifies the printing control unit 313 that no customer can be specified.

In the present embodiment, the face information acquisition unit 311 and the face authentication unit 312 perform acquisition of face information and authentication of a face prior to the operation of the receipt output button, however, the present embodiment is not limited to this. For example, the face information acquisition unit 311 and the face authentication unit 312 perform acquisition of face information and authentication of a face in response to the operation on the receipt output button.

The printing control unit 313 outputs a receipt in response to the operation on the receipt output button. Specifically, if the receipt output button is operated, then the printing control unit 313 acquires receipt information corresponding to the face information specified by the face authentication unit 312 from the receipt management table 251. Then, the printing control unit 313 print the acquired receipt information through the printing unit 36 to output a receipt corresponding to the receipt information. Further, if the printing of the printing unit 36 is completed, then the printing control unit 313 deletes the set of receipt information and face information constituting the printed object from the receipt management table 251.

Further, there is a case that the face authentication unit 312 notifies the printing control unit 313 that no customer can be specified after the receipt output button is operated. Further, there is also a case in which the printing control unit 313 cannot acquire a specifying result from the face authentication unit 312 even if a specific period of time (e.g. 10 seconds) elapses after the receipt output button is operated. In this case, the printing control unit 313 determines that the receipt information of the customer captured by the image pickup unit 37 is not stored in the receipt management table 251, and then an error is notified by a notification device (not shown). The notification device, to which no specific limitations are given, is for example, a light indicator (lamp), a voice output device such as a loudspeaker or a display device such as an LCD.

Operation of the checkout system 1 is described below.

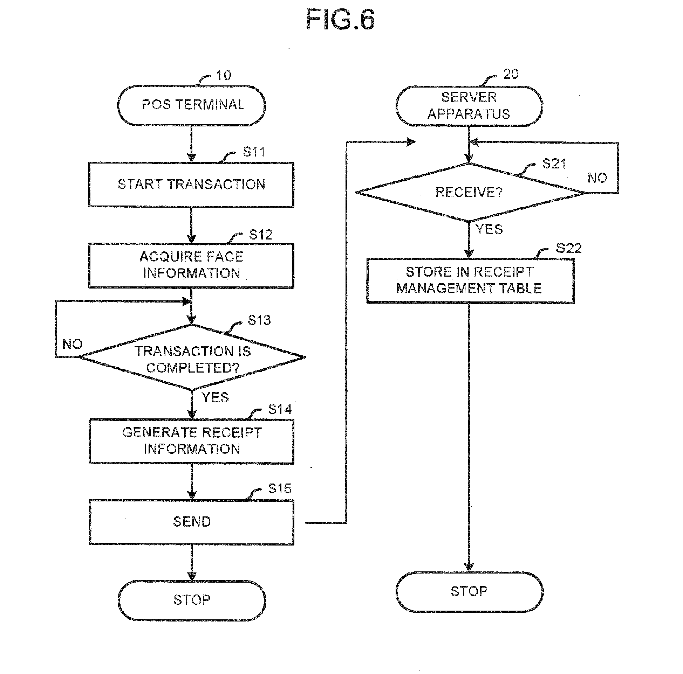

The account settlement processing carried out by the POS terminal 10 and the server apparatus 20 is described with reference to Fig. 6. Fig. 6 is a flowchart exemplifying the account settlement processing carried out by the POS terminal 10 and the server apparatus 20.

First, the account settlement unit 111 of the POS terminal 10 starts an account settlement processing for a commodity based on a commodity ID read by the scanner unit 17 (Act S11). Next, the face information acquisition unit 112 controls the image pickup unit 18 to acquire the face image of the customer captured by the image pickup unit 18 as face information (Act S12) .

The account settlement unit 111 determines whether or not the completion of a transaction is instructed according to an operation on the operation unit 15 (Act S13) . If the completion of a transaction is not instructed (Act S13: No), the account settlement unit 111 continues the account settlement processing until the completion of a transaction is instructed. If it is determined that the completion of a transaction is instructed (Act S13: Yes), the account settlement unit 111 generates receipt information itemizing contents of the transaction (Act S14).

Sequentially, the communication control unit 113 associates the receipt information generated in Act S14 with the face information acquired in Act S12 and sends the associated information to the server apparatus 20 (Act S15).

On the other hand, the communication control unit 211 of the server apparatus 20 keeps standby state until a set of receipt information and face information (associated information) is sent from the POS terminal 10 (Act S21: No). If a set of receipt information and face information is sent from the POS terminal 10, then the communication control unit 21 receives the set of receipt information and face information (Act S21: Yes).

Then, the receipt management unit 212 stores the set of receipt information and face information received in Act S21 in the receipt management table 251 (Act S22) and ends the current processing.

Through the foregoing processing, the server apparatus 20 stores the receipt information of each transaction completed by each POS terminal 10 in the receipt management table 251 together with the face information of the customer relating to the transaction.

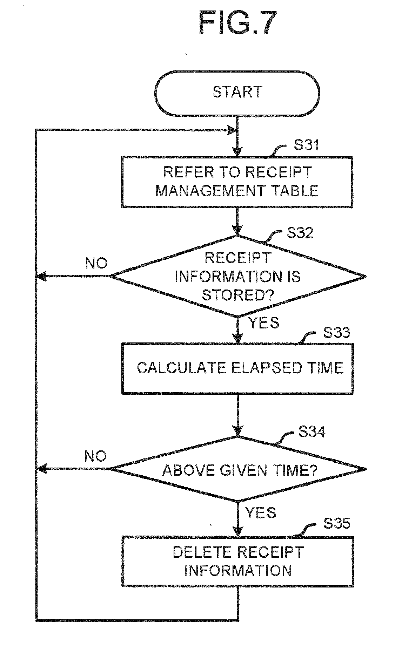

Next, a receipt deletion processing carried out by the server apparatus 20 is described with reference to Fig. 7.Fig. 7 is a flowchart exemplifying a receipt deletion processing carried out by the server apparatus 20.

First, the receipt management unit 212 of the server apparatus 20 refers to the receipt management table 251 (Act S31) to determine whether or not receipt information is stored in the receipt management table 251 (Act S32). If it is determined that no receipt information is stored in the receipt management table 251 (Act S32 : No), the receipt management unit 212 returns to execute Act S31.

On the other hand, if it is determined that receipt information is stored in the receipt management table 251 (Act S32: Yes), the receipt management unit 212 calculates elapsed time after the receipt information is stored (Act S33). A starting point at which the elapse of time is calculated may be the date and time stored in the receipt management table 251 or the date and time (date and time information) included in receipt information.

Next, the receipt management unit 212 determines whether or not the receipt information the elapsed time of which is beyond a specific period of time (e.g. 10 minutes) is stored (Act S34). If it is determined that no receipt information having the elapsed time more than the specific period of time is stored (Act S34 : No), the receipt management unit 212 returns to execute Act S31. If it is determined that there is receipt information which is stored for more than the specific period of time (Act S34: Yes), the receipt management unit 212 deletes the set of receipt information and face information from the receipt management table 251 (Act S35). Then, the receipt management unit 212 makes the processing return to Act S31.

Through the foregoing processing, the server apparatus 20 deletes, from the receipt management table 251, the one of the sets of receipt information and face information, stored in the receipt management table 251, which is stored for more than the specific period of time from the time the one is stored.

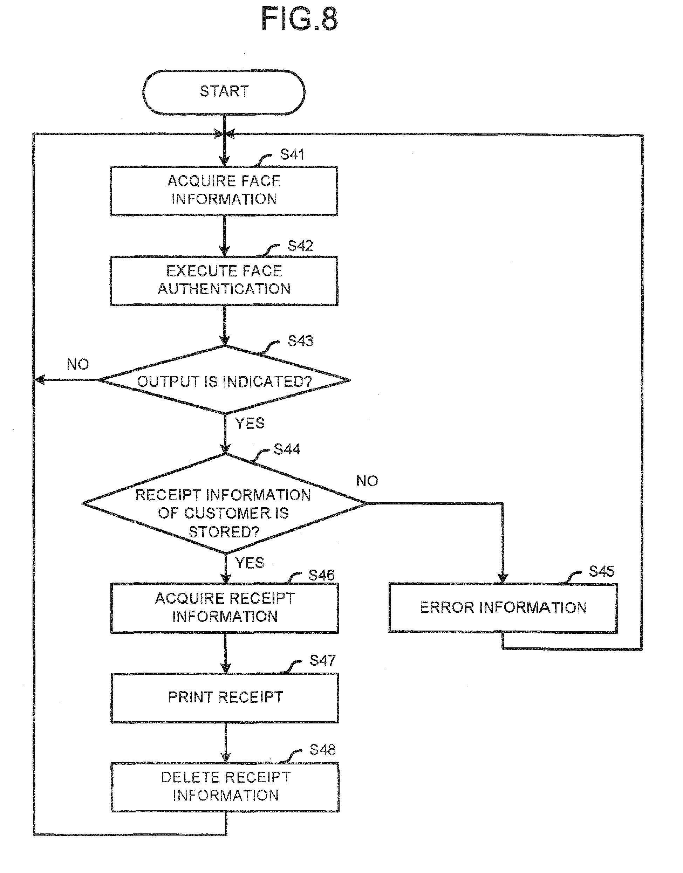

Next, a receipt output processing carried out by the printer apparatus 30 is described with reference to Fig. 8. Fig. 8 is a flowchart exemplifying a receipt output processing carried out by the printer apparatus 30.

First, the face information acquisition unit 311 of the printer apparatus 30 controls the image pickup unit 37 to acquire the face image of the customer captured by the image pickup unit 37 as face information (Act S41). Then, the face authentication unit 312 compares the face information acquired in Act S41 with the face information stored in the receipt management table 251 to authenticate the face of the customer captured by the image pickup unit 37 (Act S42).

Then, the printing control unit 313 determines whether or not the output of a receipt is instructed according to the operation on the receipt output button (Act S43). If it is determined that the output of a receipt is not instructed (Act S43: No), the printing control unit 313 makes the processing return to Act S41.

If it is determined that the output of a receipt is instructed (Act S43: Yes), the printing control unit 313 determines whether or not the receipt information of the customer is stored in the receipt management table 251 based on the result of the face authentication (Act S44). If it is determined that the receipt information of the customer is not stored in the receipt management table 251 (Act S44: No), the printing control unit 313 notifies an error through a notification device (not shown) (Act S45) and makes the processing return to Act S41.

Further, if it is determined that the receipt information of the customer is stored in the receipt management table 251 (Act S44: Yes), the printing control unit 313 acquires the corresponding receipt information from the receipt management table 251 (Act S46) . Then, the printing control unit 313 outputs the acquired receipt information to the printing unit 36 to start printing of a receipt (Act S47).

If the printing of the receipt is completed, then the printing control unit 313 deletes the set of receipt information and face information constituting the printed object from the receipt management table 251 (Act S48) . Next, the printing control unit 313 makes the processing return to Act S41.

Through the foregoing processing, the printer apparatus 30 outputs a receipt for the customer successfully passing a face authentication. In this way, the customer who completes an account settlement (transaction) through a POS terminal 10 can receive a receipt on which the content of the transaction is printed by performing a specified operation.

As stated above, in the present embodiment, a receipt can be output for a transaction without providing a printer (printing unit 36) on each POS terminal 10, and thus reducing the cost. Further, in the present embodiment, a customer decides to output a receipt, and thus unnecessary output of receipt is reduced. Therefore, with the use of the checkout system 1 of the present embodiment, receipts can be output efficiently.

Further, in the present embodiment, as a customer is authenticated (specified) using the face information of the customer without using an authentication tool such as a card medium, the load of the authentication is reduced. Further, in the present embodiment, as face information is acquired and the face of a customer is authenticated prior to the operation of the receipt output button, the standby time from the moment the receipt output button is operated to the moment a receipt is output is shortened, thus convenience in the receipt output is enhanced.

Further, in the present embodiment, as set of the receipt information and the face information which is stored in the receipt management table 251 for more than a specific period of time is deleted, set of receipt information and face information is unnecessarily kept in the receipt management table 251 for a long time is prevented, and thus the memory area of the receipt management table 251 can be used efficiently. Moreover, from the view of security point, it is preferable to delete set of the receipt information and the face information which is stored for more than a specific period of time.

Further, in the present embodiment, the printer apparatus 30 has a face authentication function (face authentication unit 312) ; however, the present embodiment is not limited to this, the face authentication function may be provided by the server apparatus 20. In this case, the face authentication unit 312 of the server apparatus 20 compares the face information acquired by the face information acquisition unit 311 with the face information of the receipt management table 251 to authenticate a face. Then, the printing control unit 313 of the printer apparatus 30 controls the output of a receipt based on the processing result of the face authentication unit 312 of the server apparatus 20.

Further, in the present embodiment, the server apparatus 20 is arranged separately from the printer apparatus 30; however, the server apparatus 20 may also be integrated with the printer apparatus 30 as an information processing apparatus.

### (Second Embodiment)

A second embodiment is described. It is described in the first embodiment that the server apparatus 20 uniformly manages set of the receipt information and face information generated (acquired) by each POS terminal 10. In the second embodiment, it is described that each POS terminal 10 manages set of receipt information and face information. Moreover, in the second embodiment, the same structural elements as the first embodiment are denoted by the same reference numerals and thus description thereof are not repeated.

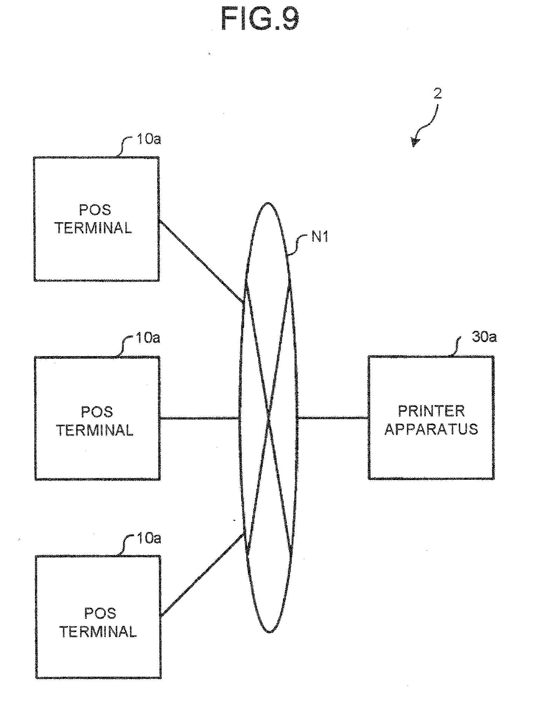

Fig. 9 is a diagram illustrating the general structure of a checkout system according to the second embodiment. As shown in Fig. 9, in accordance with the second embodiment, a checkout system 2 comprises a plurality of POS terminals 10a and a printer apparatus 30a. The POS terminal 10a is connected with the printer apparatus 30a via the network N1. The printer apparatus 30a functions as an information processing apparatus in the second embodiment.

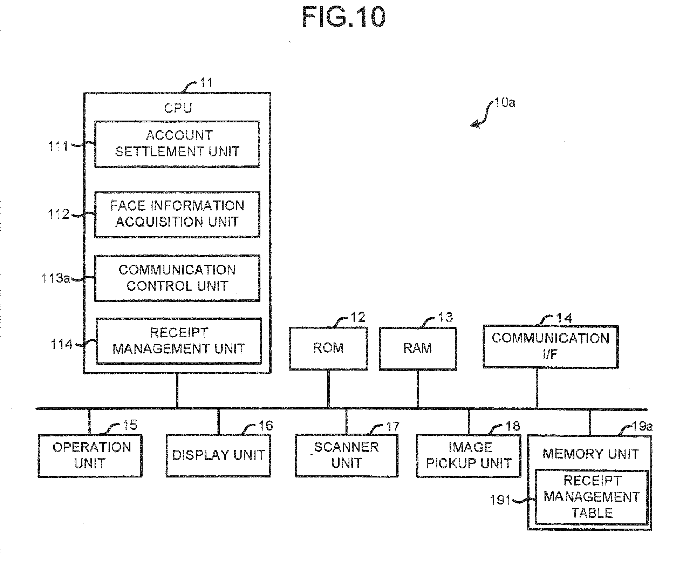

Fig. 10 is a block diagram exemplifying the structure of the POS terminal 10a. As shown in Fig. 10, the POS terminal 10a comprises a CPU 11, a ROM 12, a RAM 13, a communication I/F 14, an operation unit 15, a display unit 16, a scanner unit 17, an image pickup unit 18 and a memory unit 19a. The POS terminal 10a further comprises a timer (not shown) such as an RTC.

The memory unit 19a is a storage device equipped with a non-volatile memory medium such as an HDD or SSD, like the memory unit 19. The memory unit 19a stores various programs and data like the memory unit 19. Further, the memory unit 19a stores the receipt information and face information generated (acquired) by the terminal in a receipt management table 191 for storage and management. The receipt management table 191 is stored in such a manner that the stored receipt management table 191 is readable and writable with the printer apparatus 30. Further, the data structure of the receipt management table 191 is identical to that of the receipt management table 251 shown in Fig. 4 and is therefore not described here.

Further, by executing the programs stored in the ROM 12 and the memory unit 19a, the CPU 11 of the POS terminal 10 functions as an account settlement unit 111, a face information acquisition unit 112, a communication control unit 113a and a receipt management unit 114.

The communication control unit 113a carries out the transmission/reception of various kinds of information to or from external devices connected with the network N1 through the communication I/F 14. Specifically, the communication control unit 113a receives a request for reference (acquisition) of face information and receipt information sent from the printer apparatus 30a.

The receipt management unit 114 is a functional unit for managing the receipt management table 191. The receipt management unit 114 stores a set of the receipt information generated by the account settlement unit 111 and the face information acquired by the face information acquisition unit 112 in the receipt management table 191. Further, the receipt management unit 114 provides the receipt information and the face information stored in the receipt management table 191 to the printer apparatus 30a according to a request from the printer apparatus 30a.

Further, if a set of receipt information and face information is stored in the receipt management table 191 for more than a specific period of time, then the receipt management unit 114 deletes the set of receipt information and face information from the receipt management table 191. The starting point at which the elapse of the specific period of time is calculated may be the date and time at which the set of receipt information and face information is stored in the receipt management table 191 or the date and time (date and time information) included in receipt information. Further, a set of receipt information and face information is deleted in the present embodiment; however, what is deleted may only be face information.

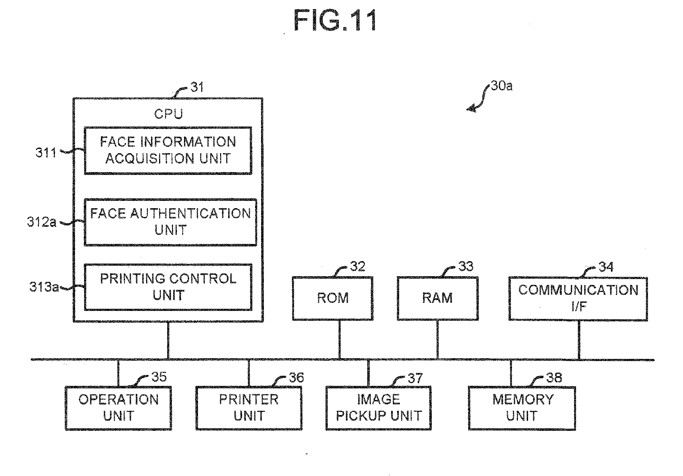

Fig. 11 is a block diagram exemplifying the structure of the printer apparatus 30a. As shown in Fig. 11, the printer apparatus 30a comprises a CPU 31, a ROM 32, a RAM 33, a communication I/F 34, an operation unit 35, a printing unit 36, an image pickup unit 37 and a memory unit 38. Further, the printer apparatus 30a includes a timer (not shown) such as an RTC.

Further, by executing the programs stored in the ROM 32 and the memory unit 38, the CPU 31 of the printer apparatus 30a realizes a face information acquisition unit 311, a face authentication unit 312a and a printing control unit 313a as functional units.

The face authentication unit 312a compares the face information acquired by the face information acquisition unit 311 with the face information stored in the receipt management table 191 of each POS terminal 10 to specify the customer photographed by the image pickup unit 37. Specifically, the face authentication unit 312a specifies the face information of the customer photographed by the image pickup unit 37 from the face information stored in each receipt management table 191 through a well-known face authentication technology. Further, with the same function as the printing control unit 313, the printing control unit 313a outputs a receipt from the printing unit 36 according to the processing result of the face authentication unit 312a.

Operation of the checkout system 2 is described below.

An account settlement processing carried out by the POS terminal 10a is described first. In the POS terminal 10a, the account settlement unit 111 and the face information acquisition unit 112 carry out the processing in Acts S11-S14 to generate (acquire) the receipt information of a transaction and related face information. Then, the receipt management unit 114 associates the receipt information generated in Act S14 with the face information acquired in Act S12 and stores the associated information in the receipt management table 191 in the POS terminal.

Further, the receipt management unit 114 of the POS terminal 10a carries out the receipt deletion processing illustrated in Fig. 7 for the receipt management table 191 of the terminal. In this way, the receipt information and the face information which are stored in the receipt management table 191 for more than a specific period of time are deleted by the receipt management unit 114.

On the other hand, each functional unit of the printer apparatus 30a carries out the receipt output processing illustrated in Fig. 8 to output a receipt. The face authentication unit 312a compares the face information acquired by the face information acquisition unit 311 with the face information stored in the receipt management table 191 of each POS terminal 10a in the face authentication in Act S42.

As stated above, in the second embodiment, by operating the receipt output button in the printer apparatus 30a, the customer who completes an account settlement (transaction) through a POS terminal 10a can receive a receipt on which the content of the transaction is printed. Thus, the second embodiment realizes the same effect as the first embodiment.

Further, in the second embodiment, the printer apparatus 30a has a face authentication function (face authentication unit 312a); however, the second embodiment is not limited to this, the face authentication function may be provided by the POS terminal 10a. In this case, the face authentication unit 312a of the POS terminal 10a compares the face information acquired by the face information acquisition unit 311 with the face information stored in the receipt management table 191 to authenticate a face. Then, the printing control unit 313a of the printer apparatus 30a controls the output of a receipt based on the processing result of the face authentication unit 312a of each POS terminal 10a. Further, if a notice 'no customer specified' is sent from all the POS terminals 10 or no customer is specified by any POS terminal 10 even after a specific period of time elapses, the printing control unit 313 notifies an error.

Further, in the second embodiment, the printer apparatus 30a is an integrated structure; however, the printer apparatus 30a may cooperate with the server apparatus, as described in the first embodiment. In this case, the server apparatus acquires (refers to) receipt information and face information from the receipt management table 191 of each POS terminal 10a according to a request, for example, from the printer apparatus 30a.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

Further, the programs executed by each apparatus of the foregoing embodiments are pre-compiled in the memory medium (e.g. ROM or memory unit) of each apparatus; however, the present invention is not limited to this. For example, programs may be recorded in a computer-readable recording medium such as a CD-ROM, a FD (Floppy Disk), a CD-R, and a DVD (Digital Versatile Disk) as an installable or executable file. Further, not limited to a medium independent from a computer or an assembly system, the memory medium further includes, for example, a memory medium which downloads programs transferred via an LAN or a network and then stores or temporarily stores the programs.

The programs executed by each apparatus of the foregoing embodiments may also be provided or distributed by a network such as the Internet.

## Claims

1. An information processing apparatus capable of being connected with a POS terminal, comprising:
an acquisition unit configured to acquire face information of a customer;
a face authentication unit configured to specify receipt information of the customer corresponding to the face information acquired by the acquisition unit by referring to a table in which receipt information generated by the POS terminal for a transaction is stored in association with face information acquired in the transaction; and
a printing control unit configured to print out the receipt information specified by the face authentication unit from a printing unit.

2. The information processing apparatus according to claim 1, further comprising:
an operation unit configured to receive an operation instructing the output of the printed receipt information, wherein
the printing control unit outputs the receipt information specified by the face authentication unit from the printing unit in response to an operation on the operation unit.

3. The information processing apparatus according to claim 2, wherein
the face authentication unit specifies the receipt information according to the face information acquired by the acquisition unit prior to the operation on the operation unit.

4. The information processing apparatus according to claim 2, wherein
the face authentication unit specifies the receipt information according to the face information acquired by the acquisition unit in response to an operation on the operation unit.

5. The information processing apparatus according to any one of claims 1 to 4, further comprising:
a management unit configured to calculate an elapsed time from a moment at which a set of receipt information and face information is stored in the table for each set and delete a set of receipt information and face information if the calculated elapsed time of the set exceeds a specific period of time.

6. A method for outputting a receipt by an information processing apparatus capable of being connected with a POS terminal, including:
acquiring face information of a customer;
specifying receipt information of the customer corresponding to the face information by referring to a table in which receipt information generated by the POS terminal for a transaction is stored in association with face information acquired in the transaction;
printing a receipt based on the specified receipt information; and
issuing the receipt to the customer.

7. The method according to claim 6, further comprising:
receiving an operation instructing the output of the printed receipt information, and
outputting by printing the receipt information specified at the specifying step in response to an operation.

8. The method according to claim 7, further comprising specifying the receipt information according to the face information acquired at the acquiring step prior to the operation.

9. The method according to claim 7, further comprising specifying the receipt information according to the face information acquired at the acquiring step in response to the operation.

10. The method according to any one of claims 6 to 9, further comprising calculating an elapsed time from a moment at which a set of receipt information and face information is stored in the table for each set and delete a set of receipt information and face information if the calculated elapsed time of the set exceeds a specific period of time.

11. A program for causing a computer to execute as an information processing apparatus according to any one of claims 1 to 5.
